# EUROPEAN PATENT APPLICATION

(11) **EP 2 073 548 A1**
(43) Date of publication of application: **24.06.2009**
(21) Application number: 08290089.5
(22) Date of filing: 01.02.2008
(51) Int. Cl.: H04N 7/24

(54) **Method for synchronizing at least two streams**

(30) Priority: 17.12.2007 EP 07291534
(71) Applicant: Alcatel Lucent, 75008 Paris (FR)
(72) Inventor: van den Berghe, Steven, 9620 Zottegem (BE)
(74) Representative: D'Halleweyn, Nele Veerle Trees Gertrudis

(57) **Abstract**

The invention relates to a method for broadcasting from a local source a local stream suitable for synchronizing with a main stream accompanied by correlated main markers broadcasted from a main source, the method comprising the steps of:
- receiving the main markers from the main source; and
- broadcasting a local stream and simultaneously broadcasting local markers correlated to the local stream, wherein the local markers are related to the main markers.

## Description

The invention relates to a method for transmitting from a local source a local stream suitable for synchronizing with a main stream accompanied by correlated main markers transmitted from a main source.

When transmitting two streams from different locations on a network, which streams have to be combined, it is difficult to synchronize those streams. Due to response times on the network it is uncertain, after a request, at which time a stream will arrive. When two streams from different locations should be received it can not be relied on that both streams will arrive at the same time.

When for example broadcasting a sports event to which localized commentary has to be added it must be made sure that the commentary is added at the main stream at the right time such that the commentator will comment on the events of the main stream.

Another application is when a main event is broadcasted and localized advertisements must be inserted at exactly the right time without overlapping the main stream. Periods are present in the main stream in which the localized advertisements can be inserted. It is necessary that both the main stream and the local stream are synchronized such that insertion is performed at the right time.

A known solution is to synchronize the clocks of the different sources by for example the network time protocol (NTP). However, this is a very complex approach.

Another solution, for example known from US-A-2006 075449, is to incorporate into the main stream markers, which indicate in which portion of the main stream, localized content can be inserted. This main stream must be received by a splicer, which upon detection of a specific marker, requests from a local source a local stream which is inserted into the master stream. However, this requires the splicer to actively demand and control streams which are mixed into the master stream. Such a solution is not suitable for adding local commentary to a main stream broadcasting a worldwide event. It would, with the prior art, require capture of the main stream and local stream, synchronizing these two streams and retransmitting the combined stream.

It is now an object of the invention to improve the synchronization of two streams. This object is achieved by the method according to the invention, which method comprises the steps of:
- receiving main markers from the main source; and
- transmitting a local stream and simultaneously transmitting local markers correlated to the local stream, wherein the local markers are related to the main markers.

As mentioned above the local source first receives the main markers and relates local markers with the main markers. By using the main markers of the main stream and the local markers of the local stream it is possible to synchronize both streams and have for example a worldwide broadcasted sport event with localized commentary or at the right time inserted local advertisements.

In an embodiment of the method for transmitting from a local source, the local stream is sent early in order not to delay the main stream upon synchronization. When for example an advertisement is to be inserted into the main stream, the local source can detect based on the main time makers that the time slot for insertion of the local advertisements is coming up. The source could already send the local stream such that when synchronizing the main stream and local stream, there is no need to wait for the local stream to arrive, which could delay the main stream.

The invention further relates to a method for synchronizing a main stream transmitted from a main source accompanied by correlated main markers and at least one local stream transmitted from a local source accompanied by local markers, the method comprising the steps of:
- receiving the main stream and the correlated main markers;
- receiving the at least one local stream and the correlated local markers; and
- synchronizing the at least one local stream and the main stream based on the main markers and the local markers.

The local markers are related to the main markers by the local source, such that when the main stream and the local stream are received together with the respective markers the streams can easily be synchronized such that for example localized commentary is added to a video stream without delay or that commercials are inserted at the right time slot of a main video stream.

In an embodiment of the method for synchronizing at least one of the main stream and at least one local stream is delayed to synchronize the streams. By delaying the stream which is most ahead of the other streams, it is possible to align the markers and make sure that all streams are synchronized correctly.

In a preferred embodiment of one of the previous methods, the local markers are a copy of the main markers.

The invention further relates to a method for transmitted a main stream suitable for synchronizing with a local stream, which method comprises the steps of:
- transmitting from a main source a main stream; and
- simultaneously with the main stream transmitting main markers being correlated to the main stream.

By broadcasting main markers being correlated to the main stream it is possible for local sources to receive those broadcasted main markers and to adjust the timing of their broadcasted content to the main stream.

In an embodiment of one of the methods according to the invention the main stream and at least one local stream comprise audio and/or video.

In another embodiment of the methods according to the invention the markers are incorporated into the respective stream. The markers can also be transmitted using the Real-time Transport Protocol (RTP). In this latter case the markers are incorporated in the header of the data packets with which the main stream or local stream is transmitted. The sequence number of the RTP packet could also be considered as the marker.

In another embodiment of the methods according to the invention different network technologies can be used to transmit the local and main stream. A broadcasted stream received over-the-air can be synchronized with a local stream over a land-line connection.

In another embodiment of the methods according to the invention the local stream can represent feedback from a consumer of the main stream. As an example, tele-voting responses can be related to the content of the main stream by correlating the mark in the tele-voting event stream to the mark last received on the main stream.

These and other features of the invention will be elucidated in conjunction with the accompanying drawings.
Figure 1 shows a schematic view of a configuration according to the invention.
Figure 2 shows a schematic view of the main stream together with a marker stream.
Figure 3 shows a schematic view of the local stream together with the local marker stream.

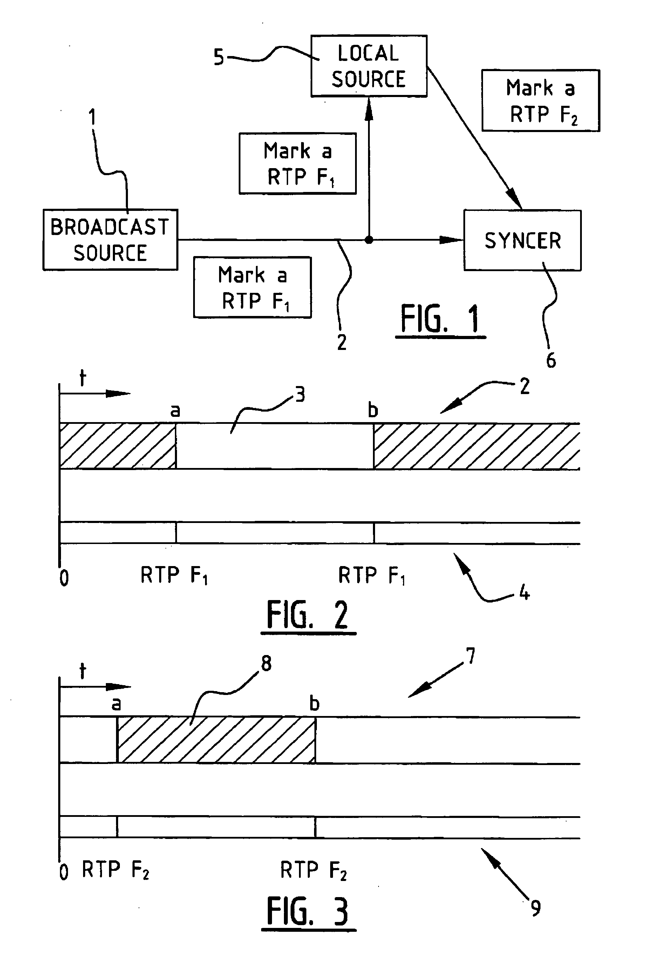

In figure 1 a configuration according to the invention is shown. With this configuration a sports event is broadcasted, which is combined with local commercials originating from a different source. It will be possible to broadcast the sports event for example in Europe and provide for each country in Europe localized version of the event by inserting commercials directed to a specific country.

A broadcast source 1, i.e. a main source, broadcasts the sports event as a main stream 2. This main stream 2 consists out of video and audio, for example as a MPEG2 stream. In figure 2 this main stream 2 is shown in more detail. The main stream 2 comprises a time slot 3 in which the main stream 2 does not comprise any audio and video, or in which general audio and video is comprised, which may be substituted by for example local commercials. This time slot 3 is marked by mark a and mark b.

According to the invention the main stream 2 is marked using the Real-time Transport Protocol (RTP). The RTP time stamps are mapped to the markers a and b. In this example, the main stream and marker stream are shown as separate RTP streams, correlated through the RTP timestamp.

When the main stream 2 is broadcasted the local source 5 and a syncer 6 also listen to this main stream and pick up the markers incorporated in the main stream. The markers will tell the local source 5 when the localized commercial can be transmitted, such that the syncer 6 can combine the main stream 2 and the local stream 7.

At the local source 5 the marker stream 4 of the main stream 2 is received. In this marker stream 4 the time slot 3 is indicated by markers a and b.

The local source has a local stream 7 containing a time slot 8 in which local commercials are comprised. This commercial time slot 8 must be inserted in the time slot 3 of the main stream 2. The time slot 8 of the local stream is delimited also by markers a and b.

Based on the received main marker stream 4, a local marker stream 9 is generated in which the markers a and b indicating the commercial time slot 8 are mapped to RTP time stamps of the local stream 7. The local stream 7 and local marker stream 9 are then transmitted to the syncer 6. The RTP time stamps of the RTP stream 3 and the marker stream 4 are identical. The local source 5 can detect from the marker stream 4 and the main stream 2, which RTP time stamp belongs to the marker a, indicating the start of the time slot 3, and which time stamp belongs to the marker b, indicating the end of the time slot 3. When these RTP time stamps are determined, they can be copied to the marker stream 9 of the local stream 7, which has a time slot 8, which is also defined by markers a and b.

At the syncer 6 the main stream 2 together with the main marker stream 4 is received as well as the local stream 7 and the local marker stream 9. The syncer 6 will have to combine both the main stream 2 and the local stream 7, such that the time slot 3 of the main stream 2 is filled with the commercials out of the time slot 8 of the local stream.

As is clear from figures 2 and 3 the local stream 7 is early in relation to the main stream 2. The syncer 6 will accordingly delay the local stream 7 such that in time t the commercial time slot 8 will be in line with the time slot 3 of the main stream 2. When the local stream is delayed enough, both streams 2,7 can be combined such that the local commercial time slot 8 fits perfectly within the time slot 3 of the main stream 2.

Another invention of the application is in overlaying of streams. With overlaying of streams it is for example meant that to a main stream consisting of video and audio a second audio stream is added, consisting of local commentary. In such an application a main stream is again provided with markers to indicate a reference to the content of the stream. This main stream together with the markers is broadcasted towards a local source and a syncer, similar to the configuration shown in figure 1. At the local source, for example a commentator, looks at the audio and video the main source and simultaneously at his commentary. The commentary of the commentator is recorded and combined with the markers of the main stream. This makes sure that the markers used in the main stream correspond to the markers used in the audio stream.

After the markers are added to the audio stream, the audio stream is, together with the markers, transmitted onto the network. There, the syncer listens to the broadcast of the local source and receives the additional audio stream having localized commentary. The syncer will then combine the main stream and combine it with the secondary audio stream comprising the local commentary. As both the main stream and the secondary audio stream have the same markers, the syncer can easily delay one of the streams such that they will be in sync and then the audio can be combined with the main stream and be delivered to the end user.

In yet another application of the invention, the markers are not used in a down stream application, as was explained above, but in an upstream application. An upstream application could for example be a televoting system. In such a case markers are sent with the main stream, wherein the markers define a period in which a user may vote. The first marker defines the start of the televoting event and provides for a synchronization. The end marker will provide for the user an indication that the voting period has expired.

When the vote of a user enters the network, the first node will act as a local source and will tag the vote with the last received mark from the main stream and sent the event upstream to be registered. When analyzing the vote, a syncer can check whether the vote was within the televoting period and hence valid. Next to the fact that the entry point of the network is a trusted source for annotating the vote, this is especially useful when different users have different delays on the main stream as the votes will be tagged relative to the main stream.

## Claims

1. Method for broadcasting from a local source a local stream suitable for synchronizing with a main stream accompanied by correlated main markers transmitted from a main source, the method comprising the steps of:
- receiving the main markers from the main source; and
- transmitting a local stream and simultaneously transmitting local markers correlated to the local stream, wherein the local markers are related to the main markers.

2. Method according to claim 1, wherein the local stream is transmitted early in order not to delay the main stream up on synchronization.

3. Method for synchronizing a main stream broadcasted from a main source accompanied by correlated main markers and at least one local stream transmitted from a local source accompanied by local markers, the method comprising the steps of:
- receiving the main stream and the correlated main markers;
- receiving the at least one local stream and the correlated local markers; and
- synchronizing the at least one local stream and the main stream based on the main markers and the local markers.

4. Method according to claim 3, wherein at least one of the main stream and at least one local stream is delayed to synchronize the streams.

5. Method according to any of the preceding claims 1-4, wherein the local markers are a copy of the main markers.

6. Method for transmitting a main stream suitable for synchronizing with a local stream, the method comprising the steps of:
- transmitting from a main source a main stream; and
- simultaneously with the main stream broadcasting main markers being correlated to the main stream.

7. Method according to any of the preceding claims, the main stream and at least one local stream comprise audio and/or video.

8. Method according to any of the preceding claims, wherein the markers are incorporated into the respective streams.

9. Method according to any of the preceding claims 1-7, wherein the markers are transmitted using the Real-time Transport Protocol (RTP).

## Amended claims

### Amended claims in accordance with Rule 137(2) EPC.

**1.** Method for broadcasting from a local source a local stream (7) suitable for synchronizing with a main stream (2) accompanied by correlated main markers (a, b) indicating references to the content of the main stream transmitted from a main source, the method comprising the steps of:
- receiving the main markers (a, b) from the main source; and
- transmitting the local stream and simultaneously transmitting local markers correlated to the local stream, wherein the local markers are related to the main markers.

**2.** Method according to claim 1, wherein the local stream is transmitted early in relation to the main stream in order not to delay the main stream up on synchronization.

**3.** Method according to any of the preceding claims, wherein the local markers are a copy of the main markers.

**4.** Method according to any of the preceding claims, the main stream and at least one local stream comprise audio and/or video.

**5.** Method according to any of the preceding claims, wherein the markers are incorporated into the respective streams.

**6.** Method according to any of the preceding claims, wherein the markers are transmitted using the Real-time Transport Protocol (RTP).

**7.** Method according to any of the preceding claims, wherein a separate RTP main marker stream is generated in which the main markers are mapped to RTP time stamps of the RTP main stream, and wherein the main marker stream is received and a local marker stream is generated in which the local marker streams are mapped to RTP time stamps of the local stream.
